# EUROPEAN PATENT APPLICATION

(11) **EP 4 645 550 A1**
(43) Date of publication of application: **05.11.2025**
(21) Application number: 23940389.2
(22) Date of filing: 16.10.2023
(51) Int. Cl.: H01M 50/244, H01M 50/204, H01M 50/249

(54) **MOUNTING DEVICE FOR BATTERY, BATTERY AND ELECTRICAL DEVICE**

(30) Priority: 09.06.2023 CN 202310682403
(71) Applicant: Contemporary Amperex Technology Co., Limited, Ningde, Fujian 352100 (CN)
(72) Inventor: WU, Kai, Ningde, Fujian 352100 (CN); LONG, Chao, Ningde, Fujian 352100 (CN); ZHANG, Wenhui, Ningde, Fujian 352100 (CN); CHEN, Xingdi, Ningde, Fujian 352100 (CN); WANG, Peng, Ningde, Fujian 352100 (CN)
(74) Representative: Gong, Jinping
(86) International application number: PCT/CN2023/124813
(87) International publication number: WO 2024/250512

(57) **Abstract**

A mounting apparatus for battery, a battery, and an electric apparatus are provided. The mounting apparatus includes: a mounting member, where at least part of a first surface of the mounting member is a flat surface for connecting to a battery, and a protruding portion is formed on the mounting member, the protruding portion protruding in a direction leaving the first surface; and a fitting member, where the fitting member is connected to the protruding portion of the mounting member. The mounting member is connected to a casing of the battery, and then the fitting member is connected to an external component, allowing the battery to be fastened to the external component. The mounting member is connected to the casing of the battery via the flat surface, that is, connection between the mounting member and the casing of the battery is implemented through surface connection without penetrating through the battery, thereby avoiding occupying internal space of the battery, and improving space utilization of the battery.

## Description

This application claims priority to Chinese Patent Application No. 2023106824038, filed on June 09, 2023 and entitled "MOUNTING APPARATUS FOR BATTERY, BATTERY, AND ELECTRIC APPARATUS", the entirety of which is incorporated into this application by reference.

### TECHNICAL FIELD

This application pertains to the field of batteries, and specifically relates to a mounting apparatus for battery, a battery, and an electric apparatus.

### BACKGROUND

In some electric apparatuses, particularly electric vehicles or hybrid vehicles, a large number of batteries are required to provide power for the vehicle. When a vehicle requires numerous batteries, the optimal storage position for the batteries is the vehicle mounting crossbeam. Therefore, a mounting apparatus is needed to mount the batteries onto the vehicle mounting crossbeam.

In some cases, a central mounting apparatus is typically used to mount the batteries onto the crossbeam. However, the central mounting apparatus needs to penetrate through the battery, occupying internal space of the battery and reducing space utilization.

### SUMMARY

This application provides a mounting apparatus for battery, a battery, and an electric apparatus, so as to address the following issue: a central mounting apparatus needs to penetrate through the battery, occupying internal space of the battery and reducing space utilization.

To address the above technical problem, a technical solution adopted by this application is to provide a mounting apparatus including: a mounting member, where the mounting member is provided with a protruding portion, part of the mounting member is a flat surface, the flat surface is connected to a casing of a battery, and the protruding portion and the flat surface are located on two opposite sides of the mounting member; and a fitting member, where the fitting member is connected to the protruding portion of the mounting member.

The mounting member is connected to the battery, and then the fitting member is connected to an external component, allowing the battery to be fastened to the external component. The mounting member is connected to the casing of the battery via the flat surface, that is, connection between the mounting member and the casing of the battery is implemented through surface connection without penetrating through the battery, thereby avoiding occupying internal space of the battery, and improving space utilization of the battery.

In some embodiments, the mounting member has an accommodating space formed at a position of the protruding portion, and at least part of the fitting member is located in the accommodating space.

Arrangement of the fitting member in the accommodating space allows the fitting member to be fastened to the mounting member, with a good fastening effect.

In some embodiments, a first opening is formed on the protruding portion, and part of the fitting member runs through the first opening to connect to an external component.

Since a part of the fitting member is located in the accommodating space and another part runs through the first opening, the fitting member can be fastened relatively securely, implementing a more stable connection between the fitting member and the external component.

In some embodiments, the mounting member has a second opening formed at a position corresponding to the protruding portion.

Arrangement of the second opening facilitates assembly of the fitting member with the mounting member.

In some embodiments, the mounting member includes a connecting member and a supporting member, where the protruding portion is located on the supporting member, and the connecting member is disposed on at least two sides of the supporting member.

Formation of the protruding portion at the supporting member ensures that no protruding arrangement is present at the connecting member, facilitating connection to the battery and enhancing overall strength of the mounting member.

In some embodiments, the connecting member is disposed on a side of the supporting member far away from the protruding portion.

The protruding arrangement of the supporting member further enhances overall strength of the mounting member.

In some embodiments, the mounting apparatus further includes a sealing gasket, where the sealing gasket is disposed around the protruding portion, and the sealing gasket abuts against the mounting member.

Arrangement of the sealing gasket can implement a waterproof function.

In some embodiments, a thickness of the sealing gasket is not less than a height of the protruding portion.

The height of the protruding portion defines a compression amount of the sealing gasket. Controlling the compression amount of the sealing gasket within a reasonable range can ensure reliable sealing.

In some embodiments, the mounting member is an elongated structure, and a plurality of protruding portions on each mounting member are spaced apart along a length direction of the mounting member.

Arrangement of multiple protruding portions on each mounting member allows a relatively long or large battery to be fastened with fewer mounting members, reducing the number of mounting members.

In some embodiments, the mounting member and the fitting member each are provided in plurality, where each mounting member is provided with one protruding portion, and each protruding portion is connected to one fitting member.

Arrangement of multiple mounting members allows flexible distribution of the mounting members.

The fitting member is a bolt, where the bolt includes a head and a stud connected to one side of the head, the head is disposed in the accommodating space, and the stud runs through the protruding portion.

The bolt is highly suitable as the fitting member, featuring a simple structure and strong connection reliability.

The fitting member is a nut, where the nut is disposed in the accommodating space, and a threaded hole of the nut corresponds to the first opening.

A nut as the fitting member can engage with an external bolt structure, featuring a simple structure and strong connection reliability.

To address the above technical problem, another technical solution adopted by this application is to provide a battery, where the battery includes a mounting apparatus, and the mounting apparatus is the mounting apparatus according to any one of the above embodiments.

Connection between the mounting member and the casing of the battery is implemented through surface connection without penetrating through the battery, thereby avoiding occupying internal space of the battery, and improving space utilization of the battery.

To address the above technical problem, still another technical solution adopted by this application is to provide an electric apparatus, where the electric apparatus includes the battery according to any one of the above embodiments, and the battery is configured to provide electrical energy.

Connection between the mounting member and the casing of the battery is implemented through surface connection without penetrating through the battery, thereby avoiding occupying internal space of the battery, and improving space utilization of the battery in the electric apparatus.

### DESCRIPTION OF DRAWINGS

To describe the technical solutions in the embodiments of this application or the prior art more clearly, the following briefly describes the accompanying drawings required for describing the embodiments. Apparently, the accompanying drawings in the following description show merely some embodiments of this application, and persons of ordinary skill in the art may still derive other drawings from these accompanying drawings without creative efforts.
FIG. 1 is a simplified schematic diagram of a vehicle according to some embodiments;
FIG. 2 is an exploded view of a battery according to some embodiments;
FIG. 3 is an exploded view of a battery according to some other embodiments;
FIG. 4 is a schematic structural diagram of a mounting apparatus according to some embodiments;
FIG. 5 is a cross-sectional view of a mounting apparatus according to some embodiments;
FIG. 6 is an exploded structural view of a battery according to some embodiments;
FIG. 7 is a top structural view of the battery in FIG. 6;
FIG. 8 is a cross-sectional view along A-A in FIG. 7;
FIG. 9 is a schematic structural diagram of a mounting apparatus according to some other embodiments;
FIG. 10 is a schematic structural diagram of a mounting apparatus according to still some other embodiments; and
FIG. 11 is a schematic structural diagram of a mounting apparatus according to yet some other embodiments.

Reference signs:
vehicle 1, battery 10, battery cell 20, controller 30, motor 40;
casing 11, cover 111, case shell 112, bottom plate 112a, electrical cavity 11a, busbar component 12, support beam 114;
mounting member 51, fitting member 52, protruding portion 53, first opening 531, connecting member 511, supporting member 512, second opening 513, and sealing gasket 54.

### DETAILED DESCRIPTION

To make the objectives, technical solutions, and advantages of this application clearer, the technical solutions in the embodiments of this application are described clearly and completely below in conjunction with the accompanying drawings showing multiple embodiments according to this application. It should be understood that the described embodiments are only a part of the embodiments of this application, rather than all embodiments. Based on the embodiments described in this application, all other embodiments obtained by persons of ordinary skill in the art without creative efforts shall fall within the scope of protection of this application.

Unless otherwise defined, all technical and scientific terms used in this application have the same meanings as commonly understood by persons skilled in the technical field to which this application pertains; terms used in the specification of this application are solely for the purpose of describing specific embodiments and are not intended to limit this application. Terms such as "include", "comprise", "have", "having", "contain", and "containing" in the specification, claims, and descriptions of the accompanying drawings of this application are open-ended terms. Therefore, if a method or an apparatus "includes", "comprises", or "has", for example, one or more steps or elements, the method or the apparatus contains the one or more steps or elements, but is not limited to the one or more elements. Terms such as "first" and "second" in the specification, claims, and descriptions of the accompanying drawings of this application are used to distinguish different objects, rather than to describe a specific order or priority relationship. Furthermore, the terms "first" and "second" are used for descriptive purposes only and shall not be construed as indicating or implying relative importance or implicitly indicating the number of technical features specified. Thus, a feature defined with "first" or "second" may explicitly or implicitly include one or more of that feature. In the description of this application, unless otherwise specified, "plurality" means two or more.

In the description of this application, it should be understood that the orientations or positional relationships indicated by terms such as "center", "transverse", "length", "width", "upper", "lower", "front", "rear", "left", "right", "perpendicular", "horizontal", "top", "bottom", "inside", "outside", "axial", "radial", "circumferential", and similar terms are based on the orientations or positional relationships shown in the accompanying drawings. These terms are used merely for ease and brevity of description of this application rather than indicating or implying that the apparatuses or components mentioned must have specific orientations or must be constructed or manipulated according to specific orientations, and therefore shall not be construed as any limitations on this application.

In the description of this application, it should be noted that, unless otherwise explicitly specified and defined, terms such as "install", "connect", "connection", and "attach" should be understood in a broad sense, for example, as a fixed connection, a detachable connection, or an integral connection; as a direct connection, an indirect connection through an intermediary, or an internal communication between two elements. Persons of ordinary skill in the art can understand the specific meanings of the above terms in this application based on specific circumstances.

Reference to "embodiment" in this application means that a specific feature, structure, or characteristic described in connection with the embodiment may be included in at least one embodiment of this application. Appearance of this phrase in various places in the specification does not necessarily refer to the same embodiment, nor is it an independent or alternative embodiment mutually exclusive with other embodiments. Persons skilled in the art explicitly and implicitly understand that the embodiments described in this application may be combined with other embodiments.

As mentioned above, it should be noted that when used in this specification, the term "include/contain" is used to clearly indicate existence of the feature, integer, step, or component, but does not exclude existence or addition of one or more other features, integers, steps, or components or sets of features, integers, steps, or components. As used in this application, singular forms "one", "a", and "the" also include plural forms, unless otherwise clearly dictated in the context.

The terms "a" and "one" in this specification can mean a single, but can also have the same meaning as "at least one" or "one or more". The term "approximately" generally means a mentioned value plus or minus 10%, or more specifically the mentioned value plus or minus 5%. The term "or" used in the claims means "and/or" unless clearly stated that the term "or" only refers to an alternative solution.

The term "and/or" in this application merely describes an associative relationship between associated objects, indicating three possible relationships: for example, A and/or B can mean A exists alone, A and B exist simultaneously, or B exists alone. In addition, the character "/" in this application generally indicates an "or" relationship between the contextually associated objects.

The battery mentioned in the embodiments disclosed in this application is a single physical module that includes one or more battery cells for providing a predetermined voltage and capacity. For example, the battery mentioned in this application may include a battery assembly, a battery pack, or the like. A battery cell is a basic unit in the battery and can generally be classified based on packaging methods into cylindrical battery cells, prismatic battery cells, and pouch battery cells. The following description primarily focuses on prismatic battery cells. It should be appreciated that the embodiments described below are also applicable to cylindrical battery cells or pouch battery cells in some aspects.

A battery cell includes a positive electrode plate, a negative electrode plate, an electrolyte, and a separator. Working of the lithium-ion battery cell mainly relies on migration of lithium ions between the positive electrode plate and the negative electrode plate. For example, a lithium-ion battery cell uses an intercalated lithium compound as one electrode material. Currently, common positive electrode materials for lithium-ion batteries include lithium cobalt oxide (LiCoO₂), lithium manganate (LiMn₂O₄), lithium nickel oxide (LiNiO₂), and lithium iron phosphate (LiFePO₄). The separator is disposed between the positive electrode plate and the negative electrode plate to form a thin film structure having three layers of materials. This thin film structure is typically made into an electrode assembly of a desired shape by winding or stacking. For example, in a cylindrical battery cell, the thin film structure with three layers of materials is wound into a cylindrical electrode assembly, while in a prismatic battery cell, the thin film structure is wound or stacked into an electrode assembly with a roughly cuboidal shape.

Multiple battery cells may be connected in series and/or parallel via electrode terminals for use in various applications. In some high-power applications, such as electric vehicles, the application of batteries includes three levels: battery cell, battery assembly, and battery. The battery assembly is formed by electrically connecting a specific quantity of battery cells and placing the battery cells into a frame, to protect the battery cells from external impact, heat, vibration, and the like. The battery is the final state of a battery system installed in an electric vehicle. The battery typically includes a casing for packaging one or more battery cells. The casing can prevent liquids or other foreign matter from affecting charging or discharging of the battery cell. The casing typically includes a cover and a case shell, where the case shell typically includes a bottom plate and outer side plates. The outer side plates extend from edges of the bottom plate, generally perpendicular to the bottom plate. The bottom plate and the outer side plates form an accommodating space with an opening for accommodating battery cells or battery assemblies. The cover covers the opening of the accommodating space, is disposed opposite the bottom plate, and is connected to the outer side plates. The case shell may be detachably connected or sealingly connected to the cover. Currently, most batteries are manufactured by assembling various control and protection systems, such as a battery management system (BMS) and thermal management components, onto one or more battery assemblies. With technological advancements, the battery assembly level may be omitted, meaning that a battery is directly formed from battery cells. Multiple battery cells connected together are then referred to as a battery module. This improvement increases the gravimetric energy density and volumetric energy density of the battery system while significantly reducing the number of components. The battery mentioned in this application includes a battery assembly or a battery.

A battery cell is typically provided with a pressure relief mechanism. The pressure relief mechanism is an element or a component that can be actuated to release internal pressure when the internal pressure or temperature of the battery cell reaches a predetermined threshold. The pressure relief mechanism is also known as an explosion-proof valve, a gas valve, a relief valve, a safety valve, or the like. The pressure relief mechanism may specifically adopt a pressure-sensitive or temperaturesensitive element or structure. To be specific, when the internal pressure or temperature of the battery cell reaches a predetermined threshold, the pressure relief mechanism performs an action or a weak structure provided in the pressure relief mechanism is destroyed, thereby forming an opening or a channel for releasing internal pressure.

In some cases, a central mounting apparatus includes a central mounting sleeve, a central mounting adapter sleeve, a sealing ring, a nut, and the like. The central mounting sleeve cooperates with the central mounting adapter sleeve to penetrate through the battery. The sealing ring is disposed between the central mounting sleeve and the central mounting adapter sleeve to achieve sealing between the central mounting sleeve and the central mounting adapter sleeve. When the central mounting apparatus is being connected to the battery, the central mounting apparatus needs to avoid battery modules within the battery, so its position cannot be arranged flexibly. Additionally, since the central mounting apparatus needs to penetrate through the battery, the central mounting apparatus will occupy internal space of the battery. During battery manufacturing, space needs to be reserved for the central mounting apparatus to penetrate through, reducing space utilization inside the battery.

The central mounting apparatus needs to penetrate through the battery, occupying internal space of the battery and reducing space utilization. Noticeably, the primary reason is the need for the central mounting apparatus to penetrate through the battery. Therefore, to address this problem, improvement can be made to the central mounting apparatus to allow the central mounting apparatus to be connected to the battery through surface connection. For example, the central mounting apparatus and the battery can be connected by welding or adhesion. Thus, the central mounting apparatus can be divided into a mounting member and a fitting member that are interconnected, where the mounting member is connected to the battery via a first surface, and the fitting member is connected to an external component for fastening the battery. This eliminates the need to penetrate through the battery, thereby avoiding occupying internal space of the battery, and improving space utilization of the battery.

Based on the above considerations, a mounting apparatus for battery, a battery, and an electric apparatus are designed to address the issue: the central mounting apparatus needs to penetrate through the battery, occupying internal space of the battery and reducing space utilization.

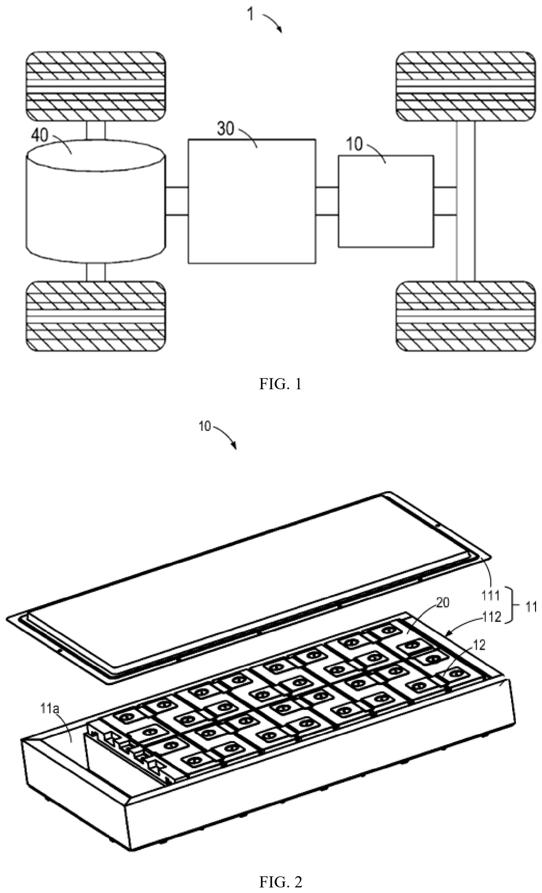

For example, FIG. 1 is a simplified schematic diagram of an electric apparatus being a vehicle 1 according to some embodiments. The vehicle 1 may be a fuel vehicle, a gas vehicle, or a new energy vehicle, where the new energy vehicle may be a battery electric vehicle, a hybrid vehicle, an extended-range vehicle, or the like. A battery 10 may be disposed inside the vehicle 1, for example, at the bottom, front, or rear of the vehicle 1. The battery 10 may be used for powering the vehicle 1; for example, the battery 10 may serve as an operational power source for the vehicle 1. Additionally, the vehicle 1 may further include a controller 30 and a motor 40. The controller 30 is configured to control the battery 10 to supply power to the motor 40, for example, to meet power demands for starting, navigation, and driving of the vehicle 1. In another embodiment of this application, the battery 10 may not only serve as an operational power source for the vehicle 1 but also serve as a driving power source for the vehicle 1, replacing or partially replacing fuel or natural gas to provide driving power for the vehicle 1. The battery 10 mentioned below may also be understood as a battery including multiple battery cells 20.

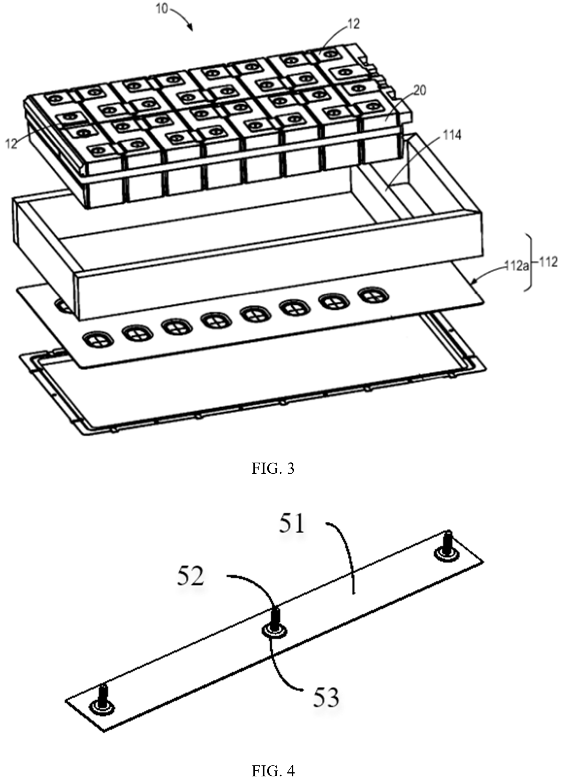

FIG. 2 and FIG. 3 are exploded views of a battery 10 according to some embodiments. As shown in FIG. 2 and FIG. 3, the battery 10 includes multiple battery cells 20 and a busbar component 12 configured to electrically connect the multiple battery cells 20. To protect the battery cells 20 from invasion or corrosion by external liquids or foreign matter, the battery 10 includes a casing 11 configured to package the multiple battery cells and other necessary components, as shown in FIG. 2 and FIG. 3. In some embodiments, the casing 11 may include a cover 111 and a case shell 112, and the battery 10 may further include a support beam 114 extending between the cover 111 and the case shell 112. The support beam 114 may extend from a bottom plate 112a of the case shell 112 toward the cover 111 in a direction perpendicular to the bottom plate 112a. The cover 111 and the case shell 112 are sealingly combined together to jointly enclose an electrical cavity 11a configured to accommodate the multiple battery cells 20. In some other embodiments, the cover 111 and the case shell 112 may be non-sealingly combined with each other.

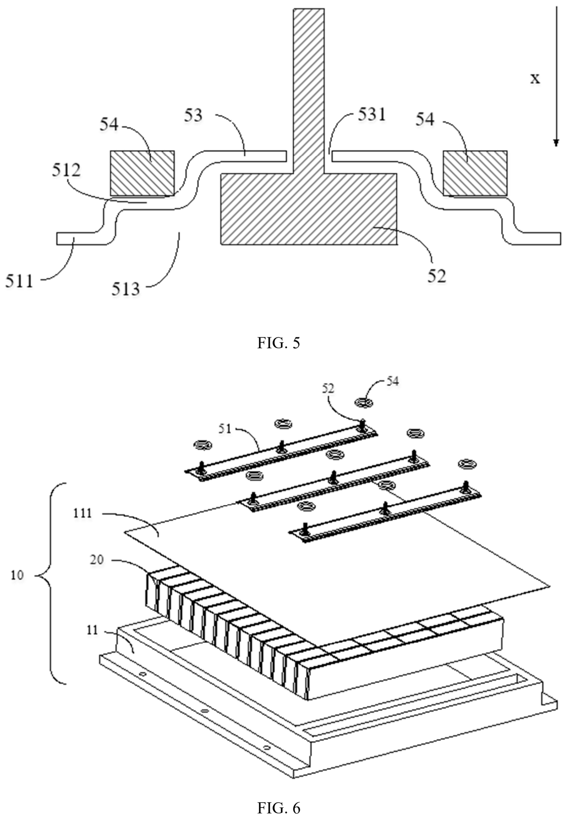

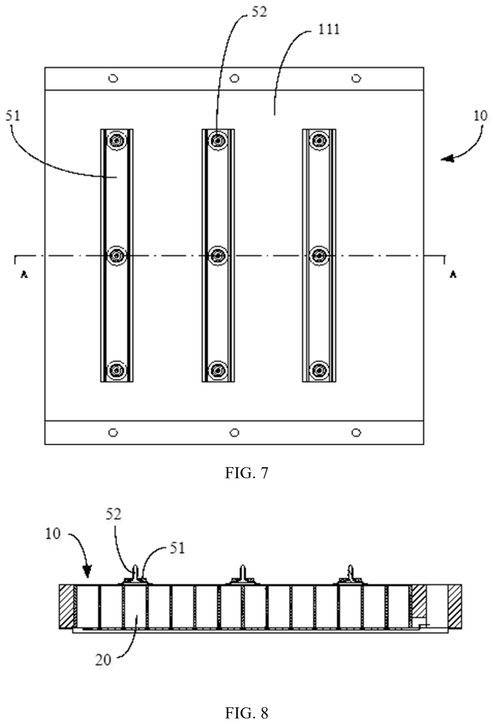

As shown in FIG. 4 to FIG. 8, FIG. 4 is a schematic structural diagram of a mounting apparatus according to some embodiments, FIG. 5 is a cross-sectional view of a mounting apparatus according to some embodiments, FIG. 6 is an exploded structural view of a battery according to some embodiments, FIG. 7 is a top structural view of the battery in FIG. 6, and FIG. 8 is a cross-sectional structural view along A-A in FIG. 7. In some embodiments, the mounting apparatus for the battery 10 includes a mounting member 51 and a fitting member 52. A protruding portion 53 is formed on the mounting member 51, part of the mounting member 51 is a flat surface, and the flat surface is connected to the casing 11 of the battery 10. The protruding portion 53 and the flat surface are located on two opposite sides of the mounting member 51. The fitting member 52 is connected to the protruding portion 53 of the mounting member 51 for connecting to an external component.

The mounting member 51 may be a bent plate-like structure or sheet-like structure, for example, a U-shaped structure or an L-shaped structure, and configured to connect the battery 10 and the fitting member 52. One side surface of the mounting member 51 is a flat surface, where the flat surface is configured to be connected to the casing 11 of the battery 10. As shown in FIG. 5, the lowermost surface of the mounting member 51 in the figure is a flat surface, configured to be connected to the casing 11 of the battery 10. The mounting member and the casing 11 may be connected by adhesion, welding, snap-fit connection, or the like. In some embodiments, the mounting member 51 is connected to the cover 111 of the casing 11. The protruding portion 53 is one or more protrusions formed on the mounting member 51. In some embodiments, the protruding portion protrudes, away from the casing 11, in a direction perpendicular to the surface where the casing 11 and the mounting apparatus are connected. The protruding portion 53 is arranged to be connected to the fitting member 52 and thus needs to avoid the casing 11 and cannot protrude toward the casing 11. As shown in FIG. 5, the lower part of the mounting member 51 in the figure is a flat surface for connecting to the casing 11, while the protruding portion 53 protrudes upward along the mounting member 51 in the figure. The downward direction in the figure is the direction indicated by x, and the upward direction is the opposite direction of x. Therefore, the flat surface is located on a lower side of the mounting member 51, and the protruding portion 53 is located on an upper side of the mounting member 51, meaning that the protruding portion 53 and the flat surface are located on two opposite sides of the mounting member 51. The fitting member 52 is a component in the mounting apparatus for connecting to an external component. Depending on the manner for connecting to the external component, the fitting member 52 may be different components. The fitting member 52 and the protruding portion 53 may be connected by abutting connection, welding, adhesion, or the like. The protruding portion 53 of the mounting member 51 may cooperate with the casing 11 to clamp and fasten the fitting member 52.

The mounting member 51 is connected to the casing of the battery 10, and then the fitting member 52 is connected to an external component, allowing the battery 10 to be fastened to the external component. The mounting member 51 is connected to the casing 11 of the battery 10 via the flat surface, that is, connection between the mounting member 51 and the casing 11 of the battery 10 is implemented through surface connection. This eliminates the need to penetrate through the battery 10, thereby avoiding occupying internal space of the battery 10, and improving space utilization of the battery 10.

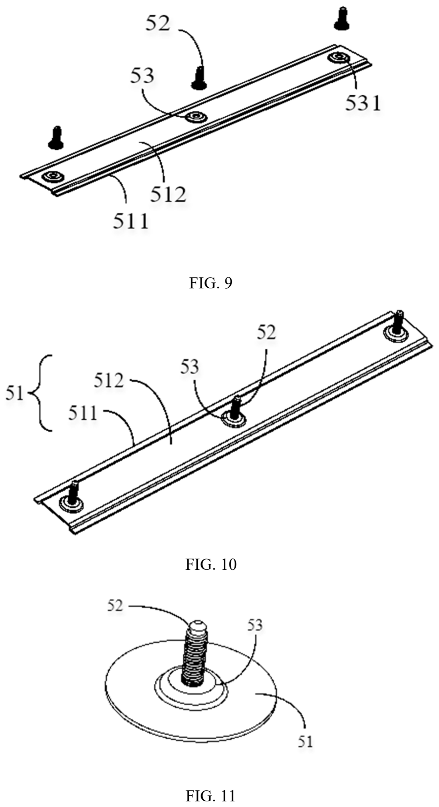

As shown in FIG. 9, FIG. 9 is a schematic structural diagram of a mounting apparatus according to some other embodiments. In some embodiments, the mounting member 51 has an accommodating space formed at the position of the protruding portion 53. At least part of the fitting member 52 is located in the accommodating space.

The accommodating space is a space for accommodating at least part of the fitting member 52. This accommodating space may be formed solely by the mounting member 51 or formed by cooperation between the protruding portion 53 of the mounting member 51 and the battery 10. At least part of the fitting member 52 is located in the accommodating space, allowing for overlap with the protruding portion 53 in a height direction, thereby saving space in the height direction.

The fitting member 52 is disposed in the accommodating space, allowing the fitting member 52 to be fastened to the mounting member 51, saving space in the height direction while ensuring a good fastening effect.

As shown in FIG. 9, FIG. 9 is a schematic structural diagram of a mounting apparatus according to still some other embodiments. In some embodiments, a first opening 531 is formed on the protruding portion 53, and part of the fitting member 52 runs through the first opening 531 to connect to an external component.

The first opening 531 is an opening on the protruding portion 53. When only part of the fitting member 52 is located in the accommodating space, the part of the fitting member 52 not disposed in the accommodating space runs through the first opening 531. When the fitting member 52 is entirely located in the accommodating space, an external component is connected to the fitting member 52 in the accommodating space through the first opening 531. Part of the fitting member 52 may run through the first opening 531 to connect to the external component and cooperate with the external component for fastening. In some embodiments, a cross-sectional area of the part of the fitting member 52 located in the accommodating space at the first opening 531 is larger than a cross-sectional area of the first opening 531, so that the part cannot run through the first opening 531 and is stably fastened in the accommodating space.

Since a part of the fitting member 52 is located in the accommodating space and another part runs through the first opening 531, while the part of the fitting member 52 in the accommodating space is confined within the accommodating space and cannot run through the first opening, the fitting member 52 can be fastened relatively securely, implementing a more stable connection between the fitting member 52 and the external component.

Still referring to FIG. 5, in some embodiments, the mounting member 51 has a second opening 513 formed at a position corresponding to the protruding portion 53.

The second opening 513 corresponds to the first opening 531, and the position of the second opening 513 is at the bottom of the protruding portion 53. In some embodiments, a surface of the protruding portion 53 is arc-shaped, so the cross-sectional area of the first opening 531 is larger than a cross-sectional area of the second opening 513. Arrangement of the second opening 513 allows the fitting member 52 to be arranged in the accommodating space through the second opening 513.

Arrangement of the second opening 513 facilitates assembly of the fitting member 52 with the mounting member 51.

In some embodiments, the mounting member 51 includes a connecting member 511 and a supporting member 512, where the protruding portion 53 is located on the supporting member 512, and the connecting member 511 is disposed on at least two sides of the supporting member 512. Referring to FIG. 5, the flat surface of the mounting member 51 is disposed on the connecting member 511 and located on a surface of the connecting member 511 in the direction x.

The connecting member 511 is a component for connecting to the battery 10, and the supporting member 512 is a component for supporting the connecting member 511. The connecting member 511 may be disposed on two sides of the supporting member 512 or around a periphery of the supporting member 512. The connecting member 511 and the supporting member 512 may be an integrally formed structure. The parts of the connecting member 511 and the supporting member 512 not provided with the protruding portion 53 may be located on the same plane.

Formation of the protruding portion 53 at the supporting member 512 ensures that no protruding arrangement is present at the connecting member 511, facilitating connection to the battery 10 and enhancing overall strength of the mounting member 51.

In some embodiments, the connecting member 511 is disposed on a side of the supporting member 512 far away from the protruding portion 53.

The connecting member 511 is connected to the casing 11 of the battery 10, and the supporting member 512 protrudes with respective to the connecting member 511, meaning that the supporting member 512 is spaced apart from the casing 11. This arrangement creates a height difference between the supporting member 512 and the connecting member 511, allowing the supporting member 512 to function as a reinforcing rib. The supporting member 512 may be formed by stamping the connecting member 511 in a direction leaving the casing 11. Edges of the supporting member 512 are connected to the connecting member 511, and the part of the supporting member 512 not provided with the protruding portion 53 may be disposed parallel to the connecting member 511.

The protruding arrangement of the supporting member 512 further enhances overall strength of the mounting member 51.

In some embodiments, the mounting apparatus for the battery 10 further includes a sealing gasket 54, where the sealing gasket 54 is disposed around the protruding portion 53, and the sealing gasket 54 abuts against the mounting member 51.

The sealing gasket 54 is made of an impermeable material, capable of preventing liquid penetration. In some embodiments, the sealing gasket 54 is made of an elastic material. A thickness of the sealing gasket 54 after installation of the mounting apparatus may be less than or equal to a thickness of the sealing gasket 54 before installation of the mounting apparatus.

Arrangement of the sealing gasket 54 can implement a waterproof function.

In some embodiments, a thickness of the sealing gasket 54 is not less than a height of the protruding portion 53.

The height of the protruding portion 53 defines a compression amount of the sealing gasket 54. Controlling the compression amount of the sealing gasket 54 within a reasonable range can ensure reliable sealing.

In some embodiments, the mounting member 51 is an elongated structure, and multiple protruding portions 53 on each mounting member 51 are spaced apart along a length direction of the mounting member 51.

The battery 10 is typically a cuboidal structure, with a cover 111 typically being a rectangular structure. Therefore, the mounting member 51 is designed as an elongated structure to match the shape of the battery 10. Additionally, a width of the mounting member 51 is less than a width of the battery 10 or the cover 111. Adjacent protruding portions 53 may be equidistantly spaced. One battery 10 may be fastened by multiple mounting members 51.

Multiple protruding portions 53 are arranged on each mounting member 51, allowing a relatively long or large battery 10 to be fastened with fewer mounting members 51, reducing the number of mounting members 51.

As shown in FIG. 11, FIG. 11 is a schematic structural diagram of a mounting apparatus according to yet some other embodiments. In some embodiments, the mounting member 51 and the fitting member 52 each are provided in plurality, each mounting member 51 is provided with one protruding portion 53, and each protruding portion 53 is connected to one fitting member 52.

When each mounting member 51 is provided with one protruding portion 53, the shape of the mounting member 51 may be flexibly set, such as circular, elliptical, square, rectangular, triangular, or other polygonal shapes, or may be set to other regular or irregular shapes as needed. This arrangement allows the mounting member 51 to be laid out as required. One battery 10 is fastened through multiple mounting members 51 and fitting members 52, allowing the connection positions between the mounting member 51 and the battery 10 to be adjusted according to actual needs.

Arrangement of multiple mounting members 51 distributes the weight of the battery 10 to be carried, improving the connection stability of the mounting members 51.

In some embodiments, the fitting member 52 is a bolt, where the bolt includes a head and a stud connected to one side of the head, the head is disposed in the accommodating space, and the stud runs through the protruding portion 53.

The bolt is a common fastening apparatus. The stud is formed with external threads for engaging with an external component such as a nut. A radial cross-sectional area of the head is larger than a radial cross-sectional area of the stud. Therefore, the head can be disposed in the accommodating space, and the stud can run through the first opening 531 and extend in a direction leaving the battery 10.

The bolt is highly suitable as the fitting member 52, featuring a simple structure and strong connection reliability.

The fitting member 52 is a nut, where the nut is disposed in the accommodating space, and a threaded hole of the nut corresponds to the first opening 531.

The threaded hole of the nut is a hole with internal threads in the nut, and may be a through hole or a blind hole. The cross-sectional area of the first opening 531 needs to be not less than a radial cross-sectional area of the threaded hole. The center of the first opening 531 is preferably on an axis of the threaded hole.

A nut as the fitting member 52 can engage with an external bolt structure, featuring a simple structure and strong connection reliability.

In some embodiments, the battery includes a casing and a mounting apparatus, where the mounting apparatus is connected to the casing. The mounting apparatus is the mounting apparatus according to any one of the above embodiments.

Connection between the mounting member 51 and the casing 11 of the battery 10 is implemented through surface connection. This eliminates the need to penetrate through the battery 10, thereby avoiding occupying internal space of the battery 10, and improving space utilization of the battery 10.

In some embodiments, the electric apparatus includes the battery 10 according to any one of the above embodiments, where the battery 10 is configured to provide electrical energy.

Connection between the mounting member 51 and the casing 11 of the battery 10 is implemented through surface connection. This eliminates the need to penetrate through the battery 10, thereby avoiding occupying internal space of the battery 10, and improving space utilization of the battery 10 in the electric apparatus.

In some specific application scenarios, to address the issue that the central mounting apparatus needing to penetrate through the battery 10 leads to occupation of internal space of the battery 10 and reduction in space utilization, the central mounting apparatus of this application includes a mounting member 51, a fitting member 52, and a sealing gasket 54. A protruding portion 53 is formed on the mounting member 51, part of the mounting member 51 is a flat surface, and the flat surface is connected to the casing 11 of the battery 10. The protruding portion 53 and the flat surface are located on two opposite sides of the mounting member 51. The fitting member 52 is connected to the protruding portion 53 of the mounting member 51 for connecting to an external component. The mounting member 51 has an accommodating space formed at a position of the protruding portion 53, and a first opening 531 is formed on the protruding portion 53. The fitting member 52 is a bolt, where the bolt includes a head and a stud connected to one side of the head, the head is disposed in the accommodating space, and the stud runs through the first opening 531 of the protruding portion 53. The first surface has a second opening formed at a position corresponding to the protruding portion 53. The mounting member 51 includes a connecting member 511 and a supporting member 512, where the protruding portion 53 is located on the supporting member 512, and the connecting member 511 is disposed on at least two sides of the supporting member 512. The supporting member 512 protrudes with respective to the connecting member 511, with a protruding direction being the same as a protruding direction of the protruding portion 53. A sealing gasket 54 is disposed corresponding to the protruding portion 53 and located on a second surface of the mounting member 51 far away from the first surface.

The mounting member 51 is connected to the casing 11 of the battery 10, and then the fitting member 52 is connected to an external component, allowing the battery 10 to be fastened to the external component. The mounting member 51 is connected to the battery 10 via the flat surface, that is, connection between the mounting member 51 and the casing 11 of the battery 10 is implemented through surface connection. This eliminates the need to penetrate through the battery 10, thereby avoiding occupying internal space of the battery 10, and improving space utilization of the battery 10.

The above descriptions are merely embodiments of this application and are not intended to limit the patent scope of this application. Any equivalent structural or procedural transformations made using the content of the specification and drawings of this application, or direct or indirect application in other related technical fields, are similarly included within the patent protection scope of this application.

## Claims

1. A mounting apparatus for battery, **characterized in that** the mounting apparatus comprises:
a mounting member, wherein the mounting member is provided with a protruding portion, part of the mounting member is a flat surface, the flat surface is connected to a casing of a battery, and the protruding portion and the flat surface are located on two opposite sides of the mounting member; and
a fitting member, wherein the fitting member is connected to the protruding portion of the mounting member.

2. The mounting apparatus for battery according to claim 1, **characterized in that** the mounting member has an accommodating space formed at a position of the protruding portion, and at least part of the fitting member is located in the accommodating space.

3. The mounting apparatus for battery according to claim 2, **characterized in that** a first opening is formed on the protruding portion, and part of the fitting member runs through the first opening to connect to an external component.

4. The mounting apparatus for battery according to claim 3, **characterized in that** the mounting member has a second opening formed at a position corresponding to the protruding portion.

5. The mounting apparatus for battery according to any one of claims 1 to 4, **characterized in that** the mounting member comprises a connecting member and a supporting member, wherein the protruding portion is located on the supporting member, and the connecting member is disposed on at least two sides of the supporting member.

6. The mounting apparatus for battery according to claim 5, **characterized in that** the connecting member is disposed on a side of the supporting member far away from the protruding portion.

7. The mounting apparatus for battery according to any one of claims 1 to 6, **characterized in that** the mounting apparatus further comprises a sealing gasket, wherein the sealing gasket is disposed around the protruding portion, and the sealing gasket abuts against the mounting member.

8. The mounting apparatus for battery according to claim 7, **characterized in that** a thickness of the sealing gasket is not less than a height of the protruding portion.

9. The mounting apparatus for battery according to any one of claims 1 to 8, **characterized in that** at least one mounting member is provided, and the fitting member is provided in plurality, wherein each mounting member is provided with a plurality of protruding portions, and each protruding portion is connected to one fitting member.

10. The mounting apparatus for battery according to claim 9, **characterized in that** the mounting member is an elongated structure, and the plurality of protruding portions on each mounting member are spaced apart along a length direction of the mounting member.

11. The mounting apparatus for battery according to any one of claims 1 to 8, **characterized in that** the mounting member and the fitting member each are provided in plurality, wherein each mounting member is provided with one protruding portion, and each protruding portion is connected to one fitting member.

12. The mounting apparatus for battery according to any one of claims 2 to 11, **characterized in that** the fitting member is a bolt, wherein the bolt comprises a head and a stud connected to one side of the head, the head is disposed in the accommodating space, and the stud runs through the protruding portion.

13. The mounting apparatus for battery according to any one of claims 3 to 12, **characterized in that** the fitting member is a nut, wherein the nut is disposed in the accommodating space, and a threaded hole of the nut corresponds to the first opening.

14. A battery, **characterized in that** the battery comprises a mounting apparatus, wherein the mounting apparatus is the mounting apparatus according to any one of claims 1 to 13.

15. An electric apparatus, **characterized in that** the electric apparatus comprises the battery according to claim 14, wherein the battery is configured to provide electrical energy.
